# EUROPÄISCHE PATENTSCHRIFT

(11) **EP 2 439 439 B1**
(45) Veröffentlichungstag und Bekanntmachung des Hinweises auf die Patenterteilung: **25.09.2013**
(21) Anmeldenummer: 11006744.4
(22) Anmeldetag: 18.08.2011
(51) Int. Cl.: F16L 37/084

(54) **Verbindungselement für eine Fluidverbindung**
Connecting element for a fluid connection
Elément de raccord pour une connexion de fluide

(30) Priorität: 09.10.2010 DE 102010048107
(43) Veröffentlichungstag der Anmeldung: 11.04.2012
(73) Patentinhaber: NORMA Germany GmbH, 63477 Maintal (DE)
(72) Erfinder: Bauer, Andreas, 63477 Maintal (DE); Rastetter, Marc, 63599 Biebergemünd (DE); Mann, Stephan, 63599 Biebergemünd (DE)
(74) Vertreter: Knoblauch, Andreas

(56) Entgegenhaltungen:
- DE-B3- 10 230 747
- DE-B3-102004 062 887
- DE-C1- 19 708 377

## Beschreibung

Die Erfindung betrifft ein Verbindungselement für eine Fluidverbindung mit einem Gehäuse, das einen Einführbereich aufweist, in dem ein Stecker axial einführbar ist, wobei das Gehäuse ein Rastelement aufweist, mit dem der Stecker verrastbar ist, wöbei ein Sicherheitselement vorgesehen ist. Ein solches Verbindungselement ist aus DE 19708377C1 bekannt.

Derartige Verbindungselemente dienen beispielsweise zum Verbinden zweier Leitungen, wie beispielsweise Kraftstoffleitungen oder UREA(Harnstoff)-Leitungen in einem Kraftfahrzeug. Sie können auch dazu dienen, eine Leitung mit einem Anschlussstutzen zu verbinden. Es ist auch denkbar, das Verbindungselement mit einem Ende an einen entsprechenden Anschluss anzuschweißen.

Der Stecker wird beispielsweise durch ein Ende einer Fluidleitung oder durch einen Anschlussstutzen gebildet. In der Regel weist ein derartiger Stecker einen umlaufenden Kragen auf, mit dem das Rastelement verrasten kann.

Um eine fluiddichte Verbindung zu erhalten, ist eine sichere Verbindung des Verbindungselements mit dem Stecker erforderlich. Häufig geschieht dabei die Montage unter Zeitdruck, wie beispielsweise auf Fließbändern. Um relativ schnell erkennen zu können, ob das Verbindungselement ordnungsgemäß mit dem Stecker verbunden ist, der Stecker also ausreichend weit in den Einführbereich eingeführt wurde und mit dem Rastelement verrastet ist, ist es bekannt, als Sicherheitselement einen Montageindikator vorzusehen. Dieser Montageindikator kann dann von einer ersten Position in eine zweite Position bewegt werden, wenn der Stecker innerhalb des Gehäuses mit dem Rastelement verrastet ist. Ein Monteur kann den Montageindikator also erst dann von der ersten Position in eine zweite Position beispielsweise durch Drücken bewegen, wenn der Stecker im Gehäuse verrastet ist, also eine sichere Verbindung hergestellt wurde. Die Stellung des Montageindikators zeigt dann an, ob eine Verrastung erfolgt ist.

Bei den bekannten Lösungen ist jedoch nicht immer gewährleistet, dass eine Bewegung des Sicherheitselements nur dann erfolgt, wenn der Stecker im Gehäuse verrastet ist. In der Regel erfolgt eine Blockade des Sicherheitselements durch den Stecker, so dass zwar eine Bewegung des Sicherheitselements nicht möglich ist, wenn der Stecker bereits relativ weit in das Gehäuse eingeführt ist, ohne bereits verrastet zu sein. Eine Bewegung des Sicherheitselements wird aber nicht behindert, bevor der Stecker in das Gehäuse eingeführt worden ist. Demzufolge ist eine Fehlbedienung nicht auszuschließen.

Zusätzlich kann es vorkommen, dass eine Bewegung des Sicherheitselements auch dann möglich ist, wenn der Stecker nicht sauber verrastet ist, sich also unter Zug wieder lösen kann.

Der Erfindung liegt die Aufgabe zugrunde, ein Verbindungselement bereit zu stellen, bei dem eine vollständige Montage gewährleistet ist.

Erfindungsgemäß wird diese Aufgabe bei einem Verbindungselement der eingangs genannten Art dadurch gelöst, dass das Rastelement gegenüber dem Gehäuse durch eine Zugbewegung zwischen Gehäuse und Rastelement axial zwischen einer ersten Stellung und einer zweiten Stellung bewegbar ist, wobei das Rastelement in der zweiten Stellung mindestens ein Raum freigibt, der durch das Sicherheitselement ausfüllbar ist.

In der ersten Stellung des Rastelements ist dieser Raum versperrt. Das Sicherheitselement bzw. ein Teil oder Vorsprung des Sicherheitselements kann erst dann in den Raum eingreifen, wenn eine ordnungsgemäße Montage abgeschlossen ist, also nur dann, wenn zwischen Rastelement und Gehäuse eine axiale Zugkraft aufgebracht worden ist. Axial bedeutet dabei in Richtung der Symmetrieachse des Einführbereichs beziehungsweise in Einführrichtung des Steckers. Bei der Montage wird der Stecker in den Einführbereich des Verbindungselements eingeführt, bis er mit dem Rastelement verrastet und gegebenenfalls an einen Anschlag anstößt. Durch eine Zugkraft, die zwischen dem Verbindungselement und dem Stecker erzeugt wird, also auf das Verbindungselement oder auf den Stecker in Axialrichtung ausgeübt wird, wird sozusagen versucht, den Stecker wieder aus dem Verbindungselement herauszuziehen. Da der Stecker aber mit dem Rastelement verbunden ist, wird diese Zugbewegung auf das Rastelement übertragen, so dass das Rastelement gegenüber dem Gehäuse axial bewegt wird. Wenn das Rastelement nicht sauber mit dem Stecker verrastet sein sollte, wird durch die Zugkraft der Stecker vom Rastelement gelöst. Dies ist durch den Monteur eindeutig bemerkbar. Wenn der Stecker sauber mit dem Rastelement verrastet ist, also sauber im Verbindungselement aufgenommen wurde, führt die Zugbewegung zwischen Gehäuse und Stecker beziehungsweise Rastelement nicht zu einem Lösen des Steckers. Vielmehr wird das Rastelement von der ersten Position in die zweite Position bewegt, wobei durch diese Bewegung ein Raum für die Bewegung des Sicherheitselements freigegeben wird. Das Sicherheitselement kann also erst dann in den Raum bewegt werden, wenn das Rastelement durch eine Zugbewegung axial im Gehäuse bewegt worden ist. Diese Zugbewegung wird durch den Stecker auf das Rastelement übertragen. Durch die erfindungsgemäße Lösung erfolgt also eine Bewegung des Sicherheitselements nur dann, wenn der Stecker mit dem Rastelement verrastet ist, also eine vollständige Montage erfolgt ist. Die Sicherheit der Verbindung zwischen Verbindungselement und Stecker ist damit gewährleistet.

Vorteilhafterweise blockiert das Sicherheitselement in der zweiten Stellung des Rastelements eine axiale Bewegung zwischen Rastelement und Gehäuse. Wenn das Sicherheitselement den Raum ausfüllt und damit anzeigt, dass der Stecker sauber mit dem Rastelement verrastet ist, ist eine weitere axiale Bewegung zwischen Rastelement und Gehäuse nicht möglich, da das Sicherheitselement verhindert, dass das Rastelement zurück in den Raum verschoben wird. Eine Relativbewegung zwischen Verbindungselement und Stecker wird damit unterbunden. Vielmehr wird eine stabile Verbindung erhalten.

Vorteilhafterweise weist das Rastelement mindestens einen elastischen Rastfinger, vorzugsweise zwei, drei oder vier elastische Rastfinger auf. Ein derartiger Rastfinger stellt eine relativ einfache Möglichkeit dar, ein elastisches Rastmittel bereitzustellen. Durch die elastische Ausbildung der Rastfinger ist dabei kein zusätzliches Gelenk notwendig, wobei durch die Elastizität auch eine erforderliche Vorspannung eingestellt werden kann. Mehrere Rastfinger sind dabei vorzugsweise kreisförmig angeordnet, so dass der Stecker zwischen den Rastfingern eingeführt werden kann, wobei die Rastfinger durch einen umlaufenden Kragen des Steckers aufgeweitet werden und nach Durchführen des Kragens mit dem Kragen verrasten.

Dafür ist es vorteilhaft, wenn der Rastfinger an seiner radialen Innenseite eine Nut und/oder einen Vorsprung aufweist. Der Vorsprung dient dazu, hinter den Kragen des Steckers einzugreifen, also zum Herstellen einer formschlüssigen Verbindung. Die Nut dient zur Aufnahme des Kragens, also ebenfalls zum Herstellen einer formschlüssigen Verbindung. Durch eine derartige Ausgestaltung sind relativ hohe Zugkräfte beziehungsweise axiale Kräfte zwischen dem Stecker und dem Rastelement übertragbar.

Vorzugsweise ist eine Verformung des Rastfingers in der zweiten Stellung des Rastelements durch das Gehäuse verhindert. Die zweite Stellung des Rastelements wird nur dadurch erreicht, dass der Stecker sauber mit dem Rastelement verrastet ist und eine axiale Zugbewegung zwischen Gehäuse und Rastelement eingebracht worden ist. Wenn nun in der zweiten Stellung des Rastelements nicht nur das Sicherheitselement in die zweite Position verstellbar ist, das dann eine weitere axiale Bewegung zwischen Rastelement und Gehäuse verhindert, sondern auch eine Verformung des oder der Rastfinger durch das Gehäuse verhindert ist, ist ein ungewolltes Lösen des Steckers praktisch nicht mehr möglich. Ein Lösen des Steckers kann nur dadurch erfolgen, dass zunächst das Sicherheitselement zurück in die erste Position bewegt wird und anschließend durch eine Druckbewegung das Rastelement zurück in die erste Stellung geschoben wird. Anschließend ist noch eine elastische Verformung der Rastfinger erforderlich, um die Verrastung zwischen dem Rastelement und dem Stecker zu lösen. Es sind also mehrere Handgriffe in einer vorbestimmten Reihenfolge notwendig, um den Stecker entfernen zu können. Ein ungewolltes Lösen ist nahezu ausgeschlossen.

Bevorzugterweise ist das Rastelement innerhalb des Gehäuses angeordnet. Das Rastelement kann dabei derartig formschlüssig innerhalb des Gehäuses gehalten sein, dass nur eine Bewegung zwischen der ersten und zweiten Stellung möglich ist. Ein Verlieren des Rastelements aus dem Gehäuse wird dadurch verhindert. Dabei wird auch erreicht, dass durch die Bewegung zwischen Gehäuse und Rastelement die axiale Länge des Verbindungselements nicht verändert wird, da die Bewegung des Rastelements innerhalb des Gehäuses erfolgt. Dabei ist das Rastelement auch relativ geschützt innerhalb des Gehäuses angeordnet, so dass eine Verschmutzung durch Umwelteinflüsse nicht zu befürchten ist.

Vorteilhafterweise ist im Bereich des Rastfingers eine Öffnung im Gehäuse angeordnet, wobei insbesondere in der zweiten Stellung des Rastelements ein Ende des Rastfingers durch das Gehäuse abgedeckt ist. Bei mehreren Rastfingern sind entsprechend viele Öffnungen vorzusehen. Durch die Öffnungen im Bereich der Rastfinger ist für eine elastische Verformung der Rastfinger, insbesondere für eine radiale Aufweitung ausreichend Raum vorhanden. Beim Einführen des Steckers, wobei sich das Rastelement in der ersten Stellung befindet, können die Rastfinger in die Öffnungen hinein verformt werden. Nach erfolgter Montage, wenn das Rastelement also in die zweite Stellung gezogen worden ist, ist eine Verformung der Rastfinger radial nach außen jedoch nicht mehr möglich, da Enden der Rastfinger durch das Gehäuse abgedeckt sind.

Bevorzugterweise weist der Rastfinger einen Vorsprung radial nach außen auf, die sich bis in die Öffnung erstreckt. Dieser Vorsprung bewirkt eine Führung des Rastelements in der Öffnung, so dass eine Verdrehung des Rastelements innerhalb des Gehäuses verhindert wird. Gleichzeitig kann der Vorsprung als Anschlag dienen, durch den die Bewegung des Rastelements in die zweite Stellung begrenzt wird.

Vorzugsweise weist der Rastfinger einen Entriegelungshebel auf, der sich durch die Öffnung hindurch erstreckt. Bei mehreren Rastfingern weist jeder Rastfinger einen Entriegelungshebel auf. Mit Hilfe dieses Entriegelungshebels kann von außen ein Druck derartig auf die Rastfinger ausgeübt werden, dass die Enden der Rastfinger radial aufgeweitet werden, wenn sich das Rastelement in der ersten Stellung befindet. Dadurch wird ein Entfernen des Steckers möglich. Da sich die Entriegelungshebel durch die Öffnungen hindurch erstrecken, ist ein einfacher Zugriff von außen möglich.

Dabei ist vorteilhafterweise der Entriegelungshebel mit dem freien Ende des Rastfingers stoffschlüssig verbunden. Der Entriegelungshebel und die Rastfinger beziehungsweise das ganze Rastelement können aber auch einstückig hergestellt worden sein, beispielsweise durch ein Spritzgussverfahren.

Vorzugsweise ragt der Entriegelungshebel in der ersten Stellung des Rastelements in den Raum für das Sicherheitselement hinein und gibt in der zweiten Stellung den Raum frei. Die Bewegung des Sicherheitselements wird also durch den oder die Entriegelungshebel freigegeben oder blockiert. Gleichzeitig verhindert dabei das Sicherheitselement eine Bewegung des Rastelements, da es den Raum ausfüllt, in den die Entriegelungshebel bewegt werden müssten. Durch diese Ausgestaltung wird also sichergestellt, dass eine Bewegung des Sicherheitselements erst nach erfolgreicher Verrastung des Steckers innerhalb des Verbindungselements und anschließendem Aufbringen einer Zugbewegung möglich ist, die dazu geführt hat, dass das Rastelement axial innerhalb des Gehäuses verschoben wurde. Gleichzeitig wird eine Zurückbewegung des Rastelements im Gehäuse durch das Sicherheitselement verhindert, sobald dieser in den Raum eingreift und damit eine sichere Verbindung anzeigt. Ein ungewolltes Lösen des Steckers wird also durch das Sicherheitselement verhindert.

In einen bevorzugten Ausführungsbeispiel ist das Sicherheitselement als Montageindikator ausgebildet, der zwischen einer ersten Position und einer zweiten Position bewegbar ist, wobei in der zweiten Stellung des Rastelements der Raum für die Bewegung des Montageindikators von der ersten Position in die zweite Position freigegeben ist. Der Montageindikator kann also erst dann von der ersten Position in die zweite Position bewegt werden, wenn sich das Rastelement in der zweiten Stellung befindet, also der Stecker ordentlich mit dem Rastelement verrastet ist. Der Montageindikator kann dabei beispielsweise per Hand in die zweite Position gedrückt werden, wodurch der Raum durch den Montageindikator ausgefüllt wird. Der Montageindikator behält also seine Funktion als Sicherheitselement, der eine axiale Bewegung des Rastelements im Gehäuse verhindert, wenn er in die zweite Position bewegt worden ist. In welcher Position sich er Montageindikator befindet, kann dabei von außen eindeutig erkannt werden. Insbesondere dann, wenn zwischen der ersten Position und der zweiten Position eine relativ weite Strecke überwunden werden muss, ist die erste Position des Montageindikators eindeutig von der zweiten Position unterscheidbar. Es ist also auf einen Blick erkennbar, ob der Montagevorgang vollständig ausgeführt worden ist.

Bevorzugterweise weist der Montageindikator eine Basis auf, von der zwei Beine ausgehen, wobei der Montageindikator mit den Beinen am Gehäuse geführt ist. Der Montageindikator ist also sozusagen U-förmig ausgebildet. Die Beine werden dabei bei der Bewegung des Montageindikators von der ersten Position in die zweite Position in den Raum bewegt, der durch die Bewegung des Rastelements von der ersten Stellung in die zweite Stellung freigegeben wird. Anschließend dienen die Beine dazu, eine Zurückbewegung des Rastelements in die erste Stellung zu verhindern. Dabei ist der Montageindikator beispielsweise senkrecht zur Axialrichtung bewegbar. Vorzugsweise sind die Beine an ihren von der Basis abgewandten Enden mit einem Bügel miteinander verbunden, der insbesondere mit einem Ende über ein stoffschlüssiges Gelenk und mit dem anderen Ende über eine Rastverbindung verbunden ist. Ein derartiger Bügel verhindert, dass der Montageindikator verloren geht. Dabei kann der Bügel beispielsweise mit beiden Beinen verrastet sein. Es ist aber auch möglich, den Bügel einstückig mit dem Montageindikator auszubilden, wobei ein stoffschlüssiges Gelenk zwischen einem Ende und dem Bügel vorgesehen ist. Eine derartige Ausbildung ermöglicht eine kostengünstige Herstellung.

Vorzugsweise weisen die Beine einen ersten Abschnitt auf, der in Axialrichtung breiter ist als ein zweiter Abschnitt, wobei der erste Abschnitt insbesondere an der Basis beginnt. Durch eine derartige Ausbildung ist es möglich, dass der Montageindikator das Gehäuse sozusagen übergreift, also durch die Beine seitlich am Gehäuse geführt ist. Solange noch keine Montage erfolgt ist, der Montageindikator also in der ersten Position angeordnet ist, wird dabei der Montageindikator über den zweiten Abschnitt am Gehäuse geführt. Eine Bewegung des Montageindikators derart, dass der Montageindikator dann durch den ersten, breiteren Abschnitt am Gehäuse geführt ist, ist nur möglich, wenn der entsprechende Raum durch das Rastelement beziehungsweise die Entriegelungshebel freigegeben worden ist. Dabei kann beim Übergang zwischen dem ersten Abschnitt und dem zweiten Abschnitt eine Stufe vorgesehen sein, so dass eine Bewegung des Rastelements von der erste Position in die zweite Position durch Formschluss verhindert wird, solange sich das Rastelement in der ersten Stellung befindet. Durch eine derartige Ausgestaltung ist eine Fehlbedienung des Montageindikators nahezu ausgeschlossen, wobei gleichzeitig eine relativ lange Führungslänge für den Montageindikator zur Verfügung steht.

Vorzugsweise entspricht dabei die Breite des ersten Abschnitts der Breite der Basis. Dies stellt eine relativ einfache Ausgestaltung dar. Gleichzeitig sind relativ wenig Kanten erforderlich.

In einer bevorzugten Ausgestaltung weist das Gehäuse seitlich je einen Vorsprung auf, der in eine Längsausnehmung in den Beinen des Montageindikators eingreift. Durch diese Vorsprünge erfolgt also eine Führung des Montageindikators bei der Bewegung von der ersten Position in die zweite Position. Gleichzeitig wird die axiale Lage des Montageindikators am Gehäuse festgelegt und der Montageindikator am Gehäuse gesichert.

In einem weiteren bevorzugten Ausführungsbeispiel sind mindestens zwei Räume diametral gegenüber angeordnet, wobei das Sicherheitselement jeweils im Bereich eines Raumes einen nach innen ragenden Vorsprung aufweist. Dabei kann das Sicherheitselement derartig ausgebildet sein, dass die Vorsprünge radial nach innen vorgespannt sind. Bei einer axialen Verschiebung des Rastelements in die zweite Stellung bewegen sich die Vorsprünge des Sicherheitselements dann automatisch in die zwei Räume, die vom Rastelement freigegeben worden sind. Das Rastelement kann dann nicht mehr ohne Weiteres zurückbewegt werden, sondern wird in seiner zweiten Stellung gehalten. Durch die Anordnung der beiden Räume diametral gegenüber erfolgt dabei eine relativ gleichmäßige und insbesondere symmetrische Krafteinleitung.

Dabei ist besonders bevorzugt, dass das Sicherheitselement einen ersten Ringabschnitt aufweist, der zwei diametral gegenüber angeordnete, insbesondere abgeflachte Abschnitte aufweist, an denen die Vorsprünge angeordnet sind, und zwei gebogene Abschnitte aufweist, wobei die gebogenen Abschnitte vom Gehäuse beabstandet sind. Durch eine derartige Ausgestaltung ist es relativ einfach möglich, die Vorsprünge radial nach innen vorzuspannen. Durch die beabstandeten gebogenen Abschnitte kann ein Freigeben der Räume durch die Vorsprünge dadurch erreicht werden, dass die gebogenen Abschnitte beispielsweise per Hand radial nach innen gedrückt werden. Durch den Abstand zwischen den gebogenen Abschnitten und dem Gehäuse ist dafür ausreichend Platz vorhanden. Beim radial nach innen Drücken der gebogenen Abschnitte bewegen sich die abgeflachten Abschnitte mit den Vorsprüngen radial nach außen, so dass die Räume freigegeben werden und das Rastelement zurück in die erste Stellung geschoben werden kann, so dass anschließend ein Lösen des Steckers möglich ist.

Vorzugsweise weist das Sicherheitselement einen zweiten Ringabschnitt auf, der insbesondere formschlüssig am Gehäuse gehalten ist. Durch den Ringabschnitt lässt sich das Sicherheitselement relativ einfach verliersicher am Gehäuse befestigen. Bei einer formschlüssigen Verbindung lässt sich dabei für die Montage des Sicherheitselements dieser zweite Ringabschnitt elastisch verformen, so dass das Sicherheitselement sicher am Gehäuse befestigt werden kann. Dafür weist der zweite Ringabschnitt beispielsweise eine innen liegende Nut auf, die mit einem entsprechenden Vorsprung des Gehäuses zusammenwirkt.

Vorteilhafterweise sind die Ringabschnitte über mindestens zwei Stege miteinander verbunden, die insbesondere an den abgeflachten Abschnitten angeordnet sind, wobei zwischen den Stegen jeweils ein Freiraum vorgesehen ist. Durch diese Stege ist eine elastische Verformung eines Ringabschnitts möglich, ohne dass dadurch die Form des anderen Ringabschnitts beeinflusst wird. Durch den Freiraum ist dabei gleichzeitig ein Zugriff auf die Rastfinger beziehungsweise Entriegelungshebel möglich.

Bevorzugterweise ist im Gehäuse, insbesondere im Einführbereich des Gehäuses, mindestens eine Radialdichtung angeordnet. Diese Radialdichtung kann dabei in Einführrichtung hinter dem Rastelement angeordnet sein, also weiter innerhalb des Gehäuses. Durch diese Radialdichtung erfolgt eine relativ dichte, insbesondere fluiddichte Verbindung zwischen dem Stecker und dem Verbindungselement. Wenn die Radialdichtung weiter von der Öffnung des Verbindungselements weg angeordnet ist als das Rastelement, wird sie durch die bei der Zugbewegung erfolgende Bewegung des Rastelements nicht beeinträchtigt. Gleichzeitig ist sie relativ geschützt innerhalb des Verbindungselements angeordnet, so dass eine Verschmutzung oder Beschädigung der Dichtung nicht zu erwarten ist.

Während ein Ende des Verbindungselements den Einführbereich aufweist, in den der Stecker einführbar ist, kann das andere Ende des Verbindungselements beispielsweise einen Schweißflansch aufweisen. Es ist auch denkbar, das andere Ende des Verbindungselements als Stecker auszubilden oder aber auch, genauso wie das erste Ende auszubilden, also ebenfalls mit einem Einführbereich zu versehen. In diesem Fall sind zwei Rastelemente und zwei Sicherheitselemente erforderlich.

Die Erfindung wird im Folgenden anhand bevorzugter Ausführungsbeispiele in Verbindung mit der Zeichnung näher beschrieben. Hierin zeigen:
- Fig. 1: ein Verbindungselement einer ersten Ausführungsform,
- Fig. 2: das Verbindungselement mit eingeführtem Stecker,
- Fig. 3: eine Seitenansicht des Verbindungselements,
- Fig. 4: eine Schnittansicht des Verbindungselements,
- Fig. 5: eine Schnittansicht des Verbindungselements mit eingeführtem Stecker,
- Fig. 6: eine räumliche Darstellung eines als Montage-indikator ausgebildeten Sicherheitselements,
- Fig. 7: eine Seitenansicht einer zweiten Ausführungsform des Verbindungselements,
- Fig. 8: eine Schnittansicht des Verbindungselements nach Fig. 7,
- Fig. 9: eine Schnittansicht des Verbindungselements nach Fig. 7 mit eingeführtem Stecker,
- Fig. 10: eine zweite Ausführungsform des als Montage-indikator ausgebildeten Sicherheitselements,
- Fig. 11: den Montageindikator nach Fig. 10 in geschlossener Form,
- Fig. 12: ein Verbindungselement einer weiteren Ausführungsform,
- Fig. 13: das Verbindungselement nach Fig. 12 in Schnittansicht,
- Fig. 14: eine räumliche Darstellung eines Sicherheitselements und
- Fig. 15: eine Schnittansicht des Sicherheitselements nach Fig. 14.

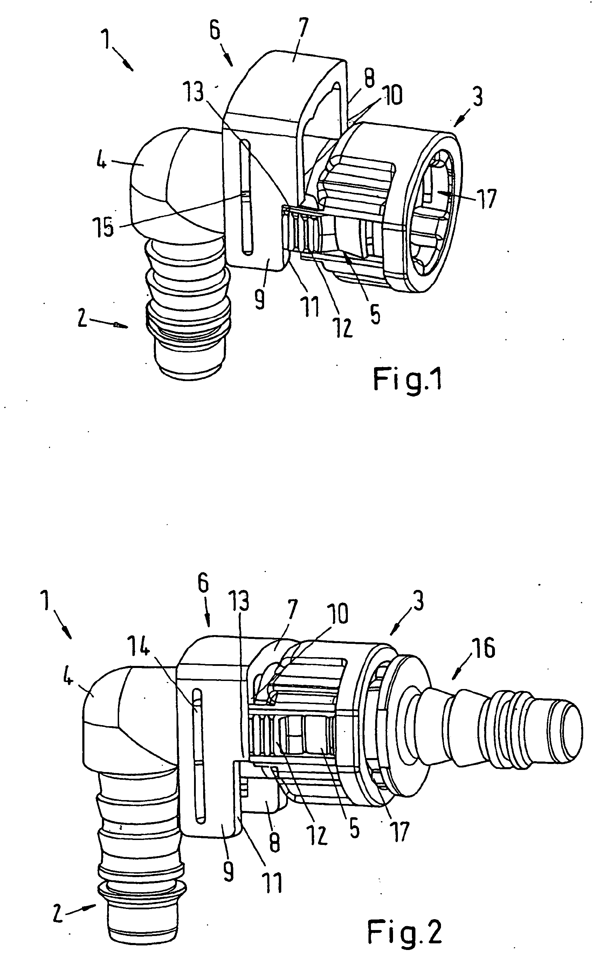

In Fig. 1 ist das Verbindungselement 1 in räumlicher Darstellung gezeigt. Das Verbindungselement 1 dient zum Verbinden zweiter Fluidleitungen und weist dafür an einem Ende einen Einsteckendabschnitt 2 und an einem anderen Ende einen Einführbereich 3 auf. In den Einführbereich 3 ist ein Stecker, also ein entsprechender Einsteckendabschnitt einer Fluidleitung oder eines Anschlussstutzens axial einführbar.

Das Verbindungselement 1 weist ein Gehäuse 4 auf, in dem ein Rastelement 5 angeordnet ist. Ferner ist am Gehäuse 4 ein als Montageindikator ausgebildetes Sicherheitselement 6 geführt, das U-förmig ausgebildet ist. Im Zusammenhang mit der Beschreibung der Fig. 1 bis 11 wird das Sicherheitselement im Folgenden als Montageindikator bezeichnet, da durch die besondere Ausgestaltung des Sicherheitselements in diesen Ausführungsbeispielen durch seine Position eindeutig erkennbar ist, ob eine vollständige Montage erfolgt ist. Das Sicherheitselement stellt also einen Montageindikator dar.

Der Montageindikator 6 weist eine Basis 7 und an jedem Ende der Basis 7 ein Bein 8, 9 auf, die sich senkrecht zur Basis 7 erstrecken. Die Beine 8, 9 weisen jeweils einen ersten Abschnitt 10 auf, der in Axialrichtung breiter als ein zweiter Abschnitt 11 ist. Der zweite Abschnitt 11 ist dabei freien Enden der Beine 8, 9 benachbart, während der erste Abschnitt 10 an der Basis 7 beginnt.

In Fig. 1 ist noch kein Stecker in das Verbindungselement 1 eingeführt. Dementsprechend befindet sich der Montageindikator 6 in einer herausgezogenen Stellung, die signalisiert, dass keine Verriegelung zwischen dem Rastelement 5 und einem Stecker erfolgt ist. Der Montageindikator 6 befindet sich also in seiner ersten Position. Eine Bewegung des Montageindikators 6 wird durch Entriegelungshebel 12 des Rastelements 5 verhindert, die bis in zwei Räume ragen, die für eine Bewegung des Montageindikators 6 freigegeben werden müssen. Dabei liegen sich die Räume diametral gegenüber und sind radial nach außen offen ausgebildet. Gleichzeitig liegt eine Stufe 13, die zwischen dem ersten Abschnitt 10 und dem zweiten Abschnitt 11 ausgebildet ist, am Entriegelungshebel 12 an und verhindert so eine Bewegung des Montageindikators 6.

Bei diesem Ausführungsbeispiel weisen die Beine 8, 9 des Montageindikators 6 jeweils eine Längsausnehmung 14 auf, in die ein Vorsprung 15 des Gehäuses 4 eingreift. Durch diese Ausgestaltung erfolgt eine Führung des Montageindikators 6 bei der Bewegung von der gezeigten ersten Position in eine zweite Position.

In Fig. 2 ist nun ein Stecker 16 mit dem Verbindungselement 1 verbunden worden, also in den Einführbereich 3 des Gehäuses 4 eingeführt worden. Dabei ist der Stecker 16 zunächst so weit wie möglich in das Gehäuse 4 hineingedrückt worden, so dass eine Verrastung des Rastelements 5 mit einem umlaufenden Kragen des Steckers 16 erfolgen konnte. Anschließend ist eine axiale Zugbewegung auf das Gehäuse 4 beziehungsweise auf den Stecker 16 ausgeübt worden. Es wurde also sozusagen versucht, den Stecker 16 wieder aus dem Gehäuse 4 herauszuziehen. Dadurch ist das Rastelement 5 axial mit dem Stecker 16 in Richtung einer Einführöffnung 17 des Gehäuses 4 bewegt worden. Die Entriegelungshebel 12 des Rastelements 5 geben dadurch einen Raum für den Montageindikator 6 frei, so dass dieser in die gezeigte zweite Position bewegt werden kann. Der erste Abschnitt 10 des Montageindikators 6 nimmt dabei den durch die Bewegung des Rastelements frei gewordenen Raum ein. Eine Zurückbewegung des Rastelements 5 ist also nicht ohne weiteres möglich. Zunächst müsste eine Bewegung des Montageindikators von der gezeigten Position zurück in die in Fig. 1 dargestellte erste Position erfolgen.

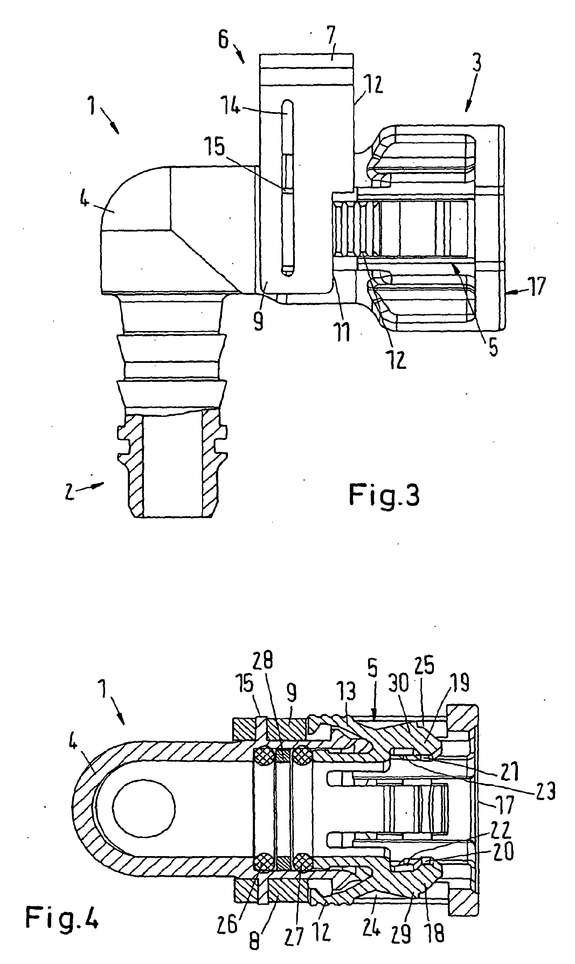

In Fig. 3 ist das Verbindungselement 1 aus Fig. 1 in Seitenansicht dargestellt. Es ist zu erkennen, dass der Einführbereich 3 einen vergrößerten Durchmesser aufweist, um einen Stecker aufnehmen zu können.

Die Ausgestaltung des Rastelements 5 ist in Fig. 4 dargestellt. Das Rastelement 5 weist insgesamt vier Rastfinger 18, 19 auf, von denen in der in Fig. 4 gezeigten Darstellung nur zwei zu sehen sind. Die Rastfinger 18, 19 sind elastisch ausgebildet und an ihren freien Enden mit radial nach innen ragenden Vorsprüngen 20, 21 versehen. An die Vorsprünge 20, 21 schließt sich jeweils eine Nut 22, 23 an, die zur Aufnahme eines Kragens oder Ringflansches des Steckers 16 dient. Wenn ein Stecker in den Einführbereich 3 des Verbindungselements eingeführt wird, werden die Rastfinger 18, 19 radial nach außen gedrückt und bewegen sich dabei in Öffnungen 24, 25 des Gehäuses 4 hinein. Eine radiale Aufweitung des Rastelements 5 ist also relativ einfach möglich. Einstückig mit den Rastfingern 18, 19 ausgebildet sind die Entriegelungshebel 12, 13, wobei durch Drücken auf die Entriegelungshebel 12, 13 die Enden der Rastfinger 18, 19 radial nach außen verformt werden. Dadurch ist auch ein Lösen eines in den Einführbereich 3 eingeführten Steckers möglich.

Innerhalb des Gehäuses 4 und weiter von der Einführöffnung 17 entfernt als das Rastelement 5 sind Radialdichtungen 26, 27 angeordnet, die eine fluiddichte Verbindung zum Stecker 16 ermöglichen. Zwischen den Radialdichtungen 26, 27 ist ein Klemmring 28 angeordnet.

Jeder der Rastfinger 18, 19 weist einen Vorsprung 29, 30 auf, der sich radial nach außen in die Öffnungen 24, 25 hinein erstreckt. Diese Vorsprünge 29, 30 dienen zum einen als Verliersicherung. Das Rastelement 5 ist dadurch nicht ohne weiteres aus dem Gehäuse 4 entfernbar. Zusätzlich dienen sie dazu, wenn bei einer Bewegung des Rastelements 5 durch eine Zugbewegung, in Fig. 4 also nach rechts, die Enden der Rastfinger 18, 19 mit dem Gehäuse 4 in Kontakt kommen, die Rastfinger 18, 19 radial nach innen zu bewegen. Dadurch wird eine sichere Verrastung gewährleistet. Die Vorsprünge 29, 30 können auf gleicher axialer Höhe wie die Nuten 22, 23 angeordnet sein. Die Rastfinger 18, 19 weisen dann auch im Bereich der Nuten 22, 23 eine ausreichende Materialstärke auf.

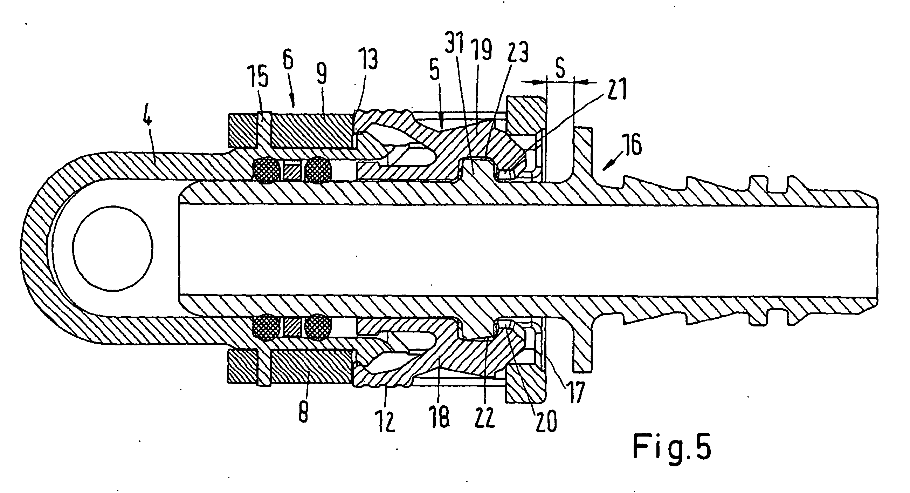

In Fig. 5 ist das Verbindungselement 1 mit eingeführtem Stecker 16 dargestellt. Ein umlaufender Kragen 31 des Steckers 16 ist mit dem Rastelement verrastet. Der umlaufende Kragen 31 ist dabei in den Nuten 22, 23 der Rastfinger 18, 19 aufgenommen, wobei die Vorsprünge 20, 21 hinter den umlaufenden Kragen 31 greifen. Zwischen dem Rastelement 5 und dem Stecker 16 sind also relativ große axiale Kräfte übertragbar. Durch das Einbringen einer axialen Zugkraft ist der Stecker 16 um eine Strecke s aus dem Gehäuse 4 herausgezogen worden, wobei dadurch das Rastelement 5 um die gleiche Strecke s von einer ersten Stellung, wie sie in Fig. 4 gezeigt ist, in eine zweite Stellung, wie sie in Fig. 5 gezeigt ist, bewegt worden ist. Die zweite Stellung befindet sich dabei axial näher an der Einführöffnung 17. Durch diese Bewegung des Rastelement 5 gegenüber dem Gehäuse 4 ist an zwei Außenseiten des Gehäuses ein Raum frei geworden, so dass der Montageindikator 6 in seine zweite Position gedrückt werden konnte. Ein Unterschied in der Breite zwischen dem ersten Abschnitt 10 und dem zweiten Abschnitt 11 entspricht dabei der Stecke s, um die das Rastelement 5 axial innerhalb des Gehäuses 4 bewegbar ist. Der erste Abschnitt 10 befindet sich nun auf einer Höhe mit den Entriegelungshebeln 12, 13 des Rastelements 5. Das Rastelement 5 kann dadurch nicht wieder in des Gehäuse 4 hineingedrückt werden. Da gleichzeitig die Rastfinger 18, 19 an ihren Enden radial außen am Gehäuse 4 anliegen, ist in der gezeigten zweiten Stellung des Rastelements 5 eine elastische Verformung der Rastfinger 18, 19 nach außen nicht möglich. Dementsprechend kann der Stecker 16 nicht aus dem Gehäuse 4 des Verbindungselements 1 entfernt werden.

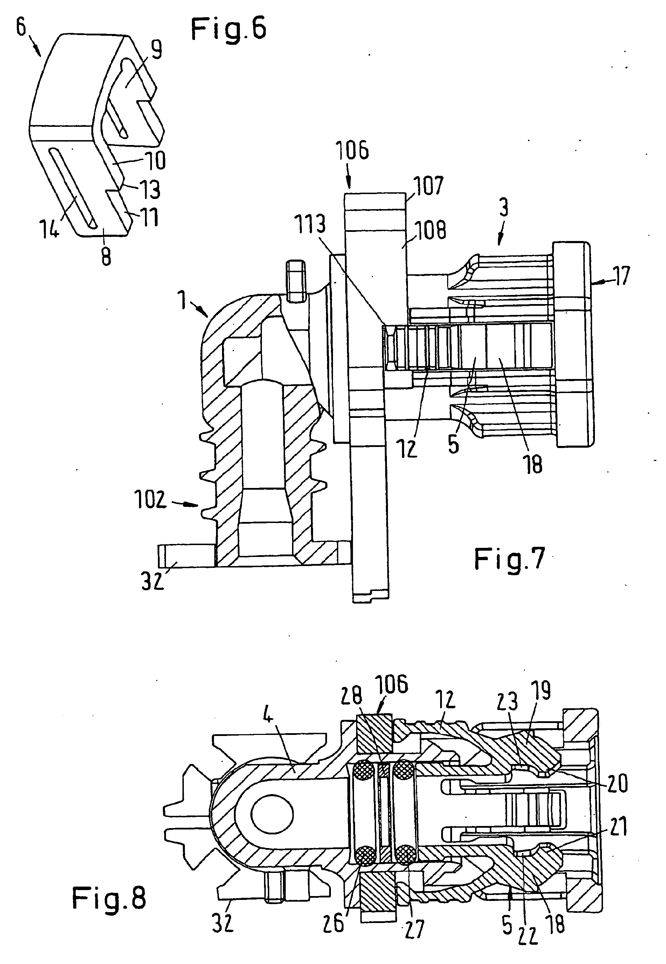

In Fig. 6 ist der Montageindikator 6, wie er bei dem Ausführungsbeispiel der Fig. 1 bis 5 verwendet wurde, vereinzelt dargestellt und mit entsprechenden Bezugszeichen versehen.

Fig. 7 zeigt nun das Verbindungselement 1 in einer zweiten Ausführungsform, wobei gleiche Elemente mit gleichen Bezugszeichen versehen sind. Ähnliche Elemente sind mit einem um 100 erhöhten Bezugszeichen versehen.

Das Verbindungselement 1 weist neben dem Einführbereich 3 einen Endbereich 102 mit einem Schweißflansch 32 auf, der zur Verbindung des Verbindungselements 1 beispielsweise an einem Kraftstofftank dient.

Ein Montageindikator 106 weist zwei Beine 108, 109 auf, die senkrecht von einer Basis 107 ausgehen. Im Übrigen entspricht das Verbindungselement 1 beispielsweise dem Verbindungselement 1 in Fig. 3.

Fig. 8 zeigt eine Schnittansicht des Verbindungselements 1 gemäß Fig. 7, bevor ein Stecker 16 in den Einführbereich 3 eingeführt worden ist. Diese Ausgestaltung entspricht weitgehend der Darstellung gemäß Fig. 4, wobei jedoch anstelle des Einsteckendabschnitts 2 ein Endabschnitt 102 mit einem Schweißflansch 32 vorgesehen ist und anstelle des Montageindikators 6 ein Montageindikator 106, der geringfügig anders ausgebildet ist.

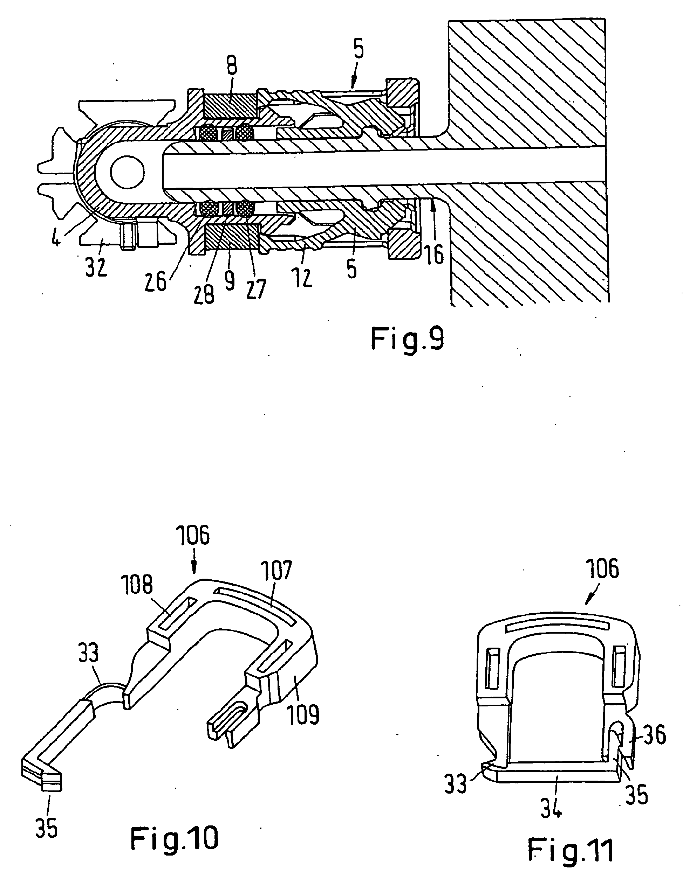

In Fig. 9 ist das Verbindungselement 1 gemäß der Fig. 7 und 8 dargestellt, wobei ein Stecker 16 in den Einführbereich 3 des Verbindungselements 1 eingeführt worden ist und anschließend eine Axialkraft zwischen dem Gehäuse 4 und dem Stecker 3 ausgeübt worden ist. Dadurch ist das Rastelement 5 von der in den Fig. 7 und 8 gezeigten ersten Stellung in die in Fig. 9 gezeigte zweite Stellung bewegt worden, so dass der Montageindikator 106 von der in den Fig. 7 und 8 gezeigten ersten Position in die in Fig. 9 gezeigte zweite Position bewegt werden konnte.

In den Fig. 10 und 11 ist der Montageindikator 106 vereinzelt dargestellt. In Fig. 10 ist dabei die Ausgangsgestalt des Montageindikators 106 gezeigt. Der Montageindikator 106 weist eine Basis 107 auf, von der U-förmig zwei Beine 108, 109 ausgehen. Am Bein 108 ist über ein stoffschlüssiges Gelenk 33 eine Verlängerung ausgebildet, die als Bügel 34 dient, um die Beine 108, 109 parallel zur Basis 107 zu verbinden.

Dafür weist der Bügel 34 ein Rastende 35 auf.

In Fig. 11 ist der Montageindikator 106 mit einem geschlossenen Bügel 34 dargestellt. Am Bein 109 ist eine entsprechende Aufnahme 36 vorgesehen, um mit dem Rastende 35 des Bügels 34 zu verrasten.

Durch Schließen des Bügels 34 kann der Montageindikator 6 unverlierbar am Verbindungselement beziehungsweise am Gehäuse 4 gehalten werden. Beim Montageindikator 6, wie er in der Ausführungsform gemäß der Fig. 1 bis 6 verwendet wird, wird ein Verlieren des Montageindikators 6 durch den Vorsprung 15 in Verbindung mit der Längsausnehmung 14 in den Beinen 8, 9 des Montageindikators 6 verhindert.

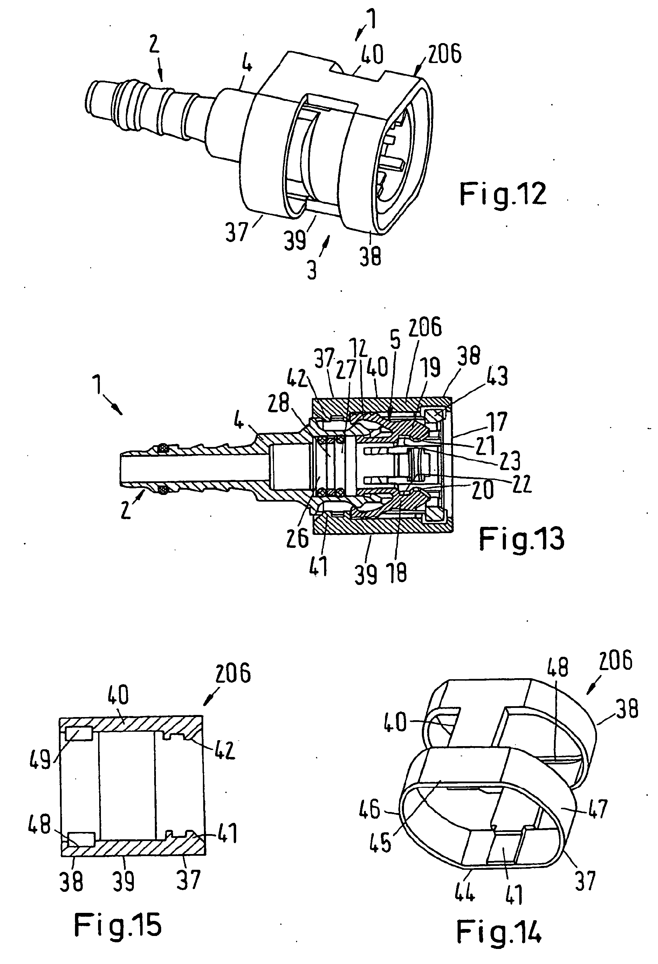

In Fig. 12 ist ein weiteres Ausführungsbeispiel des Verbindungselements 1 dargestellt. Bei diesem Ausführungsbeispiel fluchten der Einsteckendabschnitt 2 und der Einführbereich 3 miteinander, sind also auf einer gemeinsamen Achse angeordnet. Ein Sicherheitselement 206, das wie der Montageindikator 6, 106 in den vorhergegangenen Ausführungsbeispielen dazu dient, eine ungewollte axiale Bewegung des Rastelements 5 von der zweiten Stellung in die erste Stellung zu verhindern, umgibt das Gehäuse 4 der Verbindungselements 1 radial. Das Sicherheitselement weist einen ersten Ringabschnitt 37 und einen zweiten Ringabschnitt 38 auf. Die Ringabschnitte 37, 38 sind über zwei Stege 39, 40 miteinander verbunden und axial benachbart parallel zueinander angeordnet. Mit dem zweiten Ringabschnitt 38 ist das Sicherheitselement 206 am Gehäuse 4 formschlüssig festgelegt.

Die nähere Ausgestaltung des Verbindungselements ist in Fig. 13 erkennbar, wobei gleiche Teile mit den gleichen Bezugszeichen wie in den vorhergegangenen Ausführungsbeispielen bezeichnet sind. Das Sicherheitselement 206 weist am ersten Ringabschnitt 37 nach innen ragende Vorsprünge 41, 42 auf, die jeweils in einen Raum ragen, der von den Entriegelungshebeln 12 freigegeben ist, da sich das Rastelement 5 in der zweiten Stellung befindet, in der es mit einem nicht dargestellten Stecker verrastet ist. Dabei sind die Vorsprünge 41, 42 derart ausgebildet, dass sie eine axiale Rückbewegung des Rastelements 5 in die erste Stellung verhindern. Dafür sind bei dem gezeigten Ausführungsbeispiel die Vorsprünge 41, 42 jeweils zweiteilig ausgebildet, wobei jedoch eine einteilige Ausbildung der Vorsprünge möglich ist.

Im Bereich des zweiten Ringabschnitts 38 ist das Sicherheitselement 206 mit einer innen liegenden Nut versehen, die mit einem umlaufenden Flansch 43 des Gehäuses 4 derartig zusammenwirkt, dass das Sicherheitselement 206 formschlüssig am Gehäuse 4 gehalten ist.

In Fig. 14 ist das Sicherheitselement 206 vereinzelt in räumlicher Darstellung gezeigt. Der erste Ringabschnitt 37 und der zweite Ringabschnitt 38 weisen jeweils zwei abgeflachte Abschnitte 44, 45 auf, die über zwei gebogene Abschnitte 46, 47 miteinander verbunden sind. Die gebogenen Abschnitte 46, 47 stellen dabei Kreisabschnitte eines gemeinsamen Kreises dar, während die abgeflachten Abschnitte 44, 45 sozusagen Sekanten bilden. Die Stege 39, 40 sind dabei an den jeweiligen abgeflachten Abschnitten 44, 45 der Ringabschnitte 37, 38 angeordnet. Zwischen den Stegen 39, 40 weist das Sicherheitselement 206 Freiräume auf, durch die eine Bedienung der Entriegelungshebel 12 möglich ist.

Es ist zu erkennen, dass ein Abstand zwischen den abgeflachten Abschnitten 44, 45 geringer ist als ein Abstand zwischen den gebogenen Abschnitten 46, 47, die sich jeweils diametral gegenüberliegen. Durch diese Ausgestaltung liegt das Sicherheitselement 206 im Bereich der abgeflachten Abschnitte 44, 45 am Gehäuse 4 des Verbindungselements 1 an, während die gebogenen Abschnitte 46, 47 vom Gehäuse 4 beabstandet sind. Dabei ist es denkbar, dass das Sicherheitselement 206 beziehungsweise die abgeflachten Abschnitte 44, 45 mit einer Vorspannung am Gehäuse 4 anliegen. Durch Druck auf die gebogenen Abschnitte 46, 47 werden die abgeflachten Abschnitte 44, 45 radial aufgeweitet, so dass sich also ein Abstand zwischen den abgeflachten Abschnitten 44, 45 vergrößert. Dadurch werden die Vorsprünge 41, 42 ebenfalls radial nach außen bewegt und geben den Raum frei, der für eine Bewegung des Rastelements 5 von der zweiten Stellung in die erste Stellung benötigt wird. Dadurch ist es möglich, das Rastelement in eine Stellung zu verschieben, in der ein Stecker entriegelt werden kann.

Fig. 15 zeigt eine Schnittdarstellung des Sicherheitselements 206. Es ist zu erkennen, dass die Vorsprünge 41, 42, die am ersten Ringabschnitt 37 ausgebildet sind und radial nach innen ragen, jeweils zweiteilig ausgebildet sind. Durch eine derartige Ausbildung kann Material gespart werden.

Im zweiten Ringabschnitt 38 ist jeweils eine Nut 48, 49 ausgebildet, um einen Teil des Flansches 43 des Gehäuses 4 aufzunehmen und damit das Sicherheitselement 206 formschlüssig am Gehäuse 4 zu halten.

Statt das Gehäuse 4 mit einem umlaufenden Flansch 43 auszubilden, ist es auch denkbar, im Gehäuse 4 ebenfalls eine Nut vorzusehen und einen Sprengring zu verwenden, der in diese Nut und in die Nuten 48, 49 des zweiten Ringabschnitts 38 eingereift. Die Ausbildung des Gehäuses vereinfacht sich dadurch, wobei gleichzeitig auch das Anbringen des Sicherheitselements 206 vereinfacht wird.

Durch die erfindungsgemäße Ausgestaltung wird also ein Verbindungselement erhalten, bei dem eine zuverlässige Montage gewährleistet ist. Insbesondere ist eine Bewegung des Sicherheitselements bzw. des Montageindikators von einer ersten Position in eine zweite Position nur dann möglich, wenn ein Stecker sicher mit dem Verbindungselement bzw. dessen Rastelement verrastet ist. Dabei kann das Sicherheitselement bzw. der Montageindikator nicht verloren gehen, sondern wird sicher am Gehäuse des Verbindungselements gehalten. Gleichzeitig ist ein gewolltes Lösen des Steckers möglich, ohne die Funktion des Verbindungselements zu beeinträchtigen. Das Verbindungselement ist also mehrfach verwendbar.

## Patentansprüche

1. Verbindungselement (1) für eine Fluidverbindung mit einem Gehäuse (4), das einen Einführbereich (3) aufweist, in dem ein Stecker (16) axial einführbar ist, wobei das Gehäuse (4) ein Rastelement (5) aufweist, mit dem der Stecker (16) verrastbar ist, wobei ein Sicherheitselement (6) vorgesehen ist, **dadurch gekennzeichnet, dass** das Rastelement (5) gegenüber dem Gehäuse (4) durch eine Zugbewegung zwischen Gehäuse (4) und Rastelement (5) axial zwischen einer ersten Stellung und einer zweiten Stellung bewegbar ist, wobei das Rastelement (5) in der zweiten Stellung mindestens einen Raum freigibt, der durch das Sicherheitselement (6) ausfüllbar ist.

2. Verbindungselement (1) nach Anspruch 1, **dadurch gekennzeichnet, dass** das Sicherheitselement (6) in der zweiten Stellung des Rastelements (5) eine axiale Bewegung zwischen Rastelement (5) und Gehäuse (4) blockiert, wenn es in den Raum eingreift.

3. Verbindungselement (1) nach Anspruch 1 oder 2, **dadurch gekennzeichnet, dass** das Rastelement (5) mindestens einen elastischen Rastfinger (18, 19), vorzugsweise zwei, drei oder vier elastische Rastfinger aufweist.

4. Verbindungselement (1) nach einem der Ansprüche 1 bis 3, **dadurch gekennzeichnet, dass** eine Verformung des Rastfingers (18, 19) in der zweiten Stellung des Rastelements (5) durch das Gehäuse (4) verhindert ist.

5. Verbindungselement (1) nach einem der Ansprüche 1 bis 4, **dadurch gekennzeichnet, dass** das Rastelement (5) innerhalb des Gehäuses (4) angeordnet ist.

6. Verbindungselement (1) nach einem der Ansprüche 1 bis 5, **dadurch gekennzeichnet, dass** im Bereich des Rastfingers (18, 19) eine Öffnung (24, 25) im Gehäuse (4) angeordnet ist, wobei insbesondere in der zweiten Stellung des Rastelements (5) ein Ende des Rastfingers (18, 19) durch das Gehäuse (4) abgedeckt ist.

7. Verbindungselement (1) nach einem der Ansprüche 1 bis 6, **dadurch gekennzeichnet, dass** der Rastfinger (18, 19) einen Vorsprung (29, 30) radial nach außen aufweist, der sich bis in die Öffnung (24, 25) erstreckt.

8. Verbindungselement (1) nach einem der Ansprüche 1 bis 7, **dadurch gekennzeichnet, dass** der Rastfinger (18, 19) einen Entriegelungshebel (12) aufweist, der sich durch die Öffnung (24, 25) hindurch erstreckt.

9. Verbindungselement (1) nach einem der Ansprüche 1 bis 8, **dadurch gekennzeichnet, dass** der Entriegelungshebel (12) in einer ersten Stellung des Rastelements (5) in den Raum für das Sicherheitselement hineinragt und in einer zweiten Stellung den Raum freigibt.

10. Verbindungselement (1) nach einem der Ansprüche 1 bis 9, **dadurch gekennzeichnet, dass** das Sicherheitselement als Montageindikator (6, 106) ausgebildet ist, der zwischen einer ersten Position und einer zweiten Position bewegbar ist, wobei in der zweiten Stellung des Rastelements (5) der Raum für die Bewegung des Montageindikators (6, 106) von der ersten Position in die zweite Position freigegeben ist.

11. Verbindungselement (1) nach Anspruch 10, **dadurch gekennzeichnet, dass** der Montageindikator (6, 106) eine Basis (7, 107) aufweist, von der zwei Beine (8, 108, 9, 109) ausgehen, wobei der Montageindikator (6, 106) mit den Beinen (8, 108, 9, 109) am Gehäuse (4) geführt ist.

12. Verbindungselement (1) nach Anspruch 11, **dadurch gekennzeichnet, dass** die Beine (108, 109) an ihren von der Basis (107) abgewandten Enden mit einem Bügel (34) miteinander verbunden sind, der insbesondere mit einem Ende über ein stoffschlüssiges Gelenk (33) und mit dem anderen Ende über eine Rastverbindung (35, 36) verbunden ist.

13. Verbindungselement (1) einem der Ansprüche 11 oder 12, **dadurch gekennzeichnet, dass** die Beine einen ersten Abschnitt (10) aufweisen, der in Axialrichtung breiter ist als ein zweiter Abschnitt (11), wobei der erste Abschnitt (10) insbesondere an der Basis (7, 107) beginnt.

14. Verbindungselement (1) nach einem der Ansprüche 11 bis 13, **dadurch gekennzeichnet, dass** das Gehäuse (4) seitlich je einen Vorsprung (15) aufweist, der in eine Längsausnehmung (14) in den Beinen (8, 9) des Montageindikators (6) eingreift.

15. Verbindungselement (1) nach einem der Ansprüche 1 bis 9, **dadurch gekennzeichnet, dass** mindestens zwei Räume diametral gegenüber angeordnet sind, wobei das Sicherheitselement (206) jeweils im Bereich eines Raumes einen nach innen ragenden Vorsprung (41, 42) aufweist.

16. Verbindungselement (1) nach Anspruch 15, **dadurch gekennzeichnet, dass** das Sicherheitselement (206) einen ersten Ringabschnitt (37) aufweist, der zwei diametral gegenüber angeordnete, insbesondere abgeflachte Abschnitte (44, 45) aufweist, an denen die Vorsprünge (41, 42) angeordnet sind, und zwei gebogene Abschnitte (46, 47) aufweist, wobei die gebogenen Abschnitte (46, 47) vom Gehäuse (4) beabstandet sind.

17. Verbindungselement (1) nach Anspruch 15 oder 16, **dadurch gekennzeichnet, dass** das Sicherheitselement (206) einen zweiten Ringabschnitt (38) aufweist, der insbesondere formschlüssig am Gehäuse (4) gehalten ist.

18. Verbindungselement (1) nach Anspruch 17, **dadurch gekennzeichnet, dass** die Ringabschnitte (37, 38) über mindestens zwei Stege (39, 40) miteinander verbunden sind, die insbesondere an den abgeflachten Abschnitten (44, 45) angeordnet sind, wobei zwischen den Stegen jeweils ein Freiraum vorgesehen ist.

## Claims

1. Connecting element (1) for a fluid connection having a housing (4) comprising an insert region (3) in which a plug connector (16) is insertable axially, the housing (4) comprising a latching element (5) with which the plug connector (16) can be latched, a safety element (6) being provided, **characterized in that** the latching element (5) is axially movable in relation to the housing (4) between a first position and a second position via a pulling movement between the housing (4) and the latching element (5), the latching element (5) unblocking in the second position at least one space that is fillable by the safety element (6).

2. Connecting element (1) according to claim 1, **characterized in that** the safety element (6) in the second position of the latching element (5) blocks an axial movement between the latching element (5) and the housing (4) when it engages in the space.

3. Connecting element (1) according to claim 1 or 2, **characterized in that** the latching element (5) comprises at least one elastic latching finger (18, 19), preferably two, three or four elastic latching fingers.

4. Connecting element (1) according to any of claims 1 to 3, **characterized in that** a deformation of the latching finger (18, 19) in the second position is prevented by the housing (4).

5. Connecting element (1) according to any of claims 1 to 4, **characterized in that** the latching element (5) is arranged inside the housing (4).

6. Connecting element (1) according to any of claims 1 to 5, **characterized in that** in a region of the latching finger (18, 19) an opening (24, 25) is arranged in the housing (4), wherein, in particular when the latching element (5) is in the second position, an end of the latching finger (18, 19) is covered by the housing (4).

7. Connecting element (1) according to any of claims 1 to 6, **characterized in that** the latching finger (18, 19) has a radially outward projection (29, 30) that extents into the opening (24, 25).

8. Connecting element (1) according to any of claims 1 to 7, **characterized in that** the latching finger (18, 19) comprises a release lever (12) that extends through the opening (24, 25).

9. Connecting element (1) according to any of claims 1 to 8, **characterized in that** in a first position of the latching element (5) the release lever (12) projects into the space for the safety element and in a second position unblocks the space.

10. Connecting element (1) according to any of claims 1 to 9, **characterized in that** the safety element is formed as assembly indicator (6, 106) which is movable between a first position and a second position, wherein in the second position of the latching element (5) the space for the movement of the assembly indicator (6, 106) from the first position in the second position is unblocked.

11. Connecting element (1) according to claim 10, **characterized in that** the assembly indicator (6, 106) comprises a base (7, 107) from which two legs (8, 108, 9, 109) extend, the assembly indicator (6, 106) being guided on the housing (4) by the legs (8, 108, 9, 109).

12. Connecting element (1) according to claim 11, **characterized in that** the legs (108, 109) at their ends facing away from the base (107) are connected together with a bracket (34), which in particular is connected at one end via a joint by adhesive force and at an other end via a latching connection (6, 35, 36).

13. Connecting element (1) according to claims 11 or 12, **characterized in that** the legs have a first section (10) which is wider in axial direction than a second section (11), the first section (10) beginning in particular at the base (7, 107).

14. Connecting element (1) according to any of claims 11 to 13, **characterized in that** the housing (4) laterally comprises a projection (15) which engages in a longitudinal recess (14) in the legs (8, 9) of the assembly indicator.

15. Connecting element (1) according to any of claims 1 to 9, **characterized in that** at least two spaces are arranged diametrically opposite one another, wherein the safety element (206) comprises a respective projection (41, 42) in a region of a space.

16. Connecting element (1) according to claim 15, **characterized in that** the safety element (206) comprises a first ring section (37) having two in particular flattened sections (44, 45) arranged diametrically opposite on another at which the projections (41, 42) are arranged, and having two curved sections (46, 47), wherein the curved sections (46, 47) are spaced apart from the housing (4).

17. Connecting element (1) according to claim 15 or 16, **characterized in that** the safety element (206) comprises a second ring section (38) which is in particular held on the housing (4) in a positive manner.

18. Connecting element (1) according to claim 17, **characterized in that** the ring sections (37, 38) are connected to one another via at least two webs (39, 40) which in particular are arranged at the flattened sections (44, 45), wherein a gap is provided between the webs.

## Revendications

1. Elément de communication (1) pour un raccord de fluide comportant un boîtier (4), qui présente une zone d'insertion (3), dans laquelle une fiche mâle (16) peut être introduite axialement, dans lequel le boîtier (4) présente un élément de verrouillage (5), avec lequel la fiche mâle (16) peut être verrouillée, dans lequel il est prévu un élément de sécurité (16), **caractérisé en ce que** l'élément de verrouillage (5) peut être déplacé par rapport au boîtier (4) par un mouvement de traction entre le boîtier (4) et l'élément de verrouillage (5) axialement entre une première position et une seconde position, dans lequel l'élément de verrouillage (5) se trouvant dans la seconde position libère au moins un espace, qui peut être rempli par l'élément de sécurité (6).

2. Elément de communication (1) selon la revendication 1, **caractérisé en ce que** l'élément de sécurité (6) bloque, dans la seconde position de l'élément de verrouillage (5), un déplacement axial entre l'élément de verrouillage (5) et le boîtier (4) s'il s'engrène dans l'espace.

3. Elément de communication (1) selon la revendication 1 ou la revendication 2, **caractérisé en ce que** l'élément de verrouillage (5) présente au moins un doigt de verrouillage élastique (18, 19), de préférence deux, trois ou quatre doigts de verrouillage élastiques.

4. Elément de communication (1) selon l'une quelconque des revendications 1 à 3, **caractérisé en ce qu'**une déformation du doigt de verrouillage (18, 19) est empêchée par le boîtier (4) dans la seconde position de l'élément de verrouillage (5).

5. Elément de communication (1) selon l'une quelconque des revendications 1 à 4, **caractérisé en ce que** l'élément de verrouillage (5) est aménagé à l'intérieur du boîtier (4).

6. Elément de communication (1) selon l'une quelconque des revendications 1 à 5, **caractérisé en ce qu'**il se trouve, dans la zone du doigt de verrouillage (18, 19), une ouverture (24, 25) dans le boîtier (4), dans lequel, en particulier dans la seconde position de l'élément de verrouillage (5), une extrémité du doigt de verrouillage (18, 19) est recouverte par le boîtier (4).

7. Elément de communication (1) selon l'une quelconque des revendications 1 à 6, **caractérisé en ce que** le doigt de verrouillage (18, 19) présente radialement vers l'extérieur une saillie (29, 30) qui s'étend jusque dans l'ouverture (24, 25).

8. Elément de communication (1) selon l'une quelconque des revendications 1 à 7, **caractérisé en ce que** le doigt de verrouillage (18, 19) présente un levier de déverrouillage (12), qui s'étend à travers l'ouverture (24, 25).

9. Elément de communication (1) selon l'une quelconque des revendications 1 à 8, **caractérisé en ce que** le levier de déverrouillage (12) fait saillie, dans une première position de l'élément de verrouillage (5), dans l'espace destiné à l'élément de sécurité et libère l'espace dans une seconde position.

10. Elément de communication (1) selon l'une quelconque des revendications 1 à 9, **caractérisé en ce que** l'élément de sécurité se présente sous la forme d'un indicateur de montage (6, 106) qui peut être déplacé entre une première position et une seconde position, dans lequel, dans la seconde position de l'élément de verrouillage (5), l'espace prévu pour le déplacement de l'indicateur de montage (6, 106) de la première position à la seconde position est libéré.

11. Elément de communication (1) selon la revendication 10, **caractérisé en ce que** l'indicateur de montage (6, 106) présente une base (7, 107) d'où ressortent deux jambes (8, 108, 9, 109), dans lequel l'indicateur de montage (6, 106) est guidé avec les jambes (8, 108, 9, 109) sur le boîtier (4).

12. Elément de communication (1) selon la revendication 11, **caractérisé en ce que** les jambes (108, 109) sont reliées l'une à l'autre sur leurs extrémités opposées à la base (107) à l'aide d'un étrier (34), qui est relié en particulier à une extrémité via une articulation venue de matière (33) et à l'autre extrémité via un raccord de verrouillage (35, 36).

13. Elément de communication (1) selon l'une quelconque des revendications 11 ou 12, **caractérisé en ce que** les jambes présentent une première section (10), qui est plus large dans la direction axiale qu'une seconde section (11), dans lequel la première section (10) prend naissance en particulier sur la base (7, 107).

14. Elément de communication (1) selon l'une quelconque des revendications 11 à 13, **caractérisé en ce que** le boîtier (4) présente latéralement respectivement une saillie (15), qui s'accroche dans un évidement longitudinal (14) des jambes (8, 9) de l'indicateur de montage (6).

15. Elément de communication (1) selon l'une quelconque des revendications 1 à 9, **caractérisé en ce qu'**au moins deux espaces sont agencés diamétralement en regard l'un de l'autre, dans lequel l'élément de sécurité (206) présente respectivement dans la zone d'un espace une saillie (41, 42) qui dépasse vers l'intérieur.

16. Elément de communication (1) selon la revendication 15, **caractérisé en ce que** l'élément de sécurité (206) présente une première section annulaire (37), qui présente deux sections (44, 45) aménagées diamétralement l'une en regard de l'autre, en particulier aplaties, sur lesquelles les saillies (41, 42) sont aménagées, et présente deux sections incurvées (46, 47), dans lequel les sections incurvées (46, 47) sont espacées du boîtier (4).

17. Elément de communication (1) selon la revendication 15 ou la revendication 16, **caractérisé en ce que** l'élément de sécurité (206) présente une seconde section annulaire (38), qui est maintenue en particulier par adaptation de formes sur le boîtier (4).

18. Elément de communication (1) selon la revendication 17, **caractérisé en ce que** les sections annulaires (37, 38) sont reliées l'une à l'autre via au moins deux barrettes (39, 40), qui sont aménagées en particulier sur les sections aplaties (44, 45), dans lequel un espace libre est respectivement prévu entre les barrettes.
